Europäisches Patentamt

European Patent Office

Office européen des brevets

(19)

(11) EP 0 507 394 B1

(12) EUROPEAN PATENT SPECIFICATION

(45) Date of publication and mention
of the grant of the patent:
10.06.1998 Bulletin 1998/24

(51) Int Cl.6: H04B 10/14

(21) Application number: 92200888.3

(22) Date of filing: 30.03.1992

(54) **Optical transmitter**

Optischer Sender

Emetteur optique

(84) Designated Contracting States:
DE FR GB IT SE

(30) Priority: 03.04.1991 EP 91200774

(43) Date of publication of application:
07.10.1992 Bulletin 1992/41

(73) Proprietor: Philips Electronics N.V.
5621 BA Eindhoven (NL)

(72) Inventor: de Rijck, Alexander Christiaan
NL-5656 AA Eindhoven (NL)

(74) Representative:
Deguelle, Wilhelmus Hendrikus Gerardus et al
INTERNATIONAAL OCTROOIBUREAU B.V.,
Prof. Holstlaan 6
5656 AA Eindhoven (NL)

(56) References cited:
US-A- 4 504 976

• 12TH EUROPEAN CONFERENCE ON OPTICAL
COMMUNICATION, TECHNICAL DIGEST, vol. 1,
September 1986, BARCELONA ES pages 321 -
324 NICIA ET AL 'A wide-band general- purpose
ECL/analog laser driver IC'
• 13TH EUROPEAN CONFERENCE ON OPTICAL
COMMUNICATION, TECHNICAL DIGEST, vol. 1,
September 1987, HELSINKI FI pages 453 - 456
BANWELL ET AL 'Low cost transmitter
strategies using 1.3um CD type laser diodes'
• 1980 IEEE INTERNATIONAL SYMPOSIUM ON
CIRCUITS AND SYSTEMS PROCEEDINGS vol. 3,
April 1980, HOUSTON US pages 926 - 930 SMITH
ET AL 'Laser level control for high bit rate optical
fibre systems'

## Description

The invention relates to an optical transmitter comprising a combination of an electro-optical converter and an opto-electrical converter optically coupled thereto, which combination is included in the negative feedback path of a control loop, the input of the electro-optical converter being coupled to the input of the negative feedback path and the output of the opto-electrical converter being coupled to the output of the negative feedback path; this control loop also including a control amplifier, whilst the output of the negative feedback path is coupled to an input of the control amplifier, the output of the control amplifier is coupled to a first input of combining means whose output is coupled to the input of the negative feedback path and whilst a modulation signal is applied to a second input of the combining means.

A transmitter of this type is described in United States Patent 4,504,976. Transmitters of this type may be used, for example, in optical recording systems and in optical telecommunication systems.

In these systems the electro-optical converter is often desired to be biased, so that it generates a certain amount of light when a modulation signal is absent. In optical recording systems this is desired because the light generated when a modulation signal is absent is used to read information from a record carrier. In digital telecommunication systems the bias is desired because the maximum attainable modulation frequency of the electro-optical converter is much higher when this bias is present than when this bias is absent. This is caused by the fact that the switch-on delay of a fully switched-off electro-optical converter is much longer than increasing an amount of light by an electro-optical converter to a given value from a bias of the converter.

The electro-optical converters used in systems of this type generally have a strong threshold effect. This is to say that the current flowing through the electro-optical converter is to have a value exceeding a specific threshold upstream of this converter emits light. This threshold is strongly temperature-dependent and furthermore exhibits a large variation per specimen.

Because the threshold of the current flowing through the electro-optical converter exhibits a large spreading, it is not readily feasible to bias the amount of light generated by the electro-optical converter by means of a fixed bias current of this converter.

In order to yet obtain a well-determined bias of the generated light, the electro-optical converter is generally included in the negative feedback path of a control loop together with an opto-electrical converter, whilst a fraction of the light emitted by the electro-optical converter is applied to the opto-electrical converter. Since the opto-electrical converter is included in the negative feedback path, the output signal of the opto-electrical converter and thus also the amount of light generated by the electro-optical converter is maintained at a predetermined value by the control loop.

Generally, the amount of light emitted by the electro-optical converter can be amplitude modulated by coupling the modulation signal to the input of the gain control. However, this leads to a restriction of the maximum permissible frequency of the modulation signal, because the gain control preferably has a high gain factor and thus a limited bandwidth.

In the transmitter known from said United States Patent 4,504,976, the light emitted by the electro-optical converter is amplitude modulated by coupling the modulation signal directly at the input of the negative feedback path so that the limiting effect of the gain control on the maximum permissible frequency of the modulation signal is eliminated. A problem is then that the control loop tries to maintain the output signal of the negative feedback path and thus also the amount of light emitted by the electro-optical converter at a constant level and is thus capable of reducing or even fully cancelling the effect of the modulation signal on the emitted amount of light.

In this known transmitter it is possible to apply a high-frequency modulation signal to the input of the negative feedback path by arranging the control loop in such a way that it is only active for low frequencies, so that the control loop now no longer affects the relation between the modulation signal and the emitted amount of light.

A drawback of the transmitter known from US 4,504,976 is that it is unsuitable for modulation signals which comprise a DC component. A solution to said problem is described in the paper "A wide-band general purpose ECL/analog laser driver IC" by A.J.A. Nicia and D.T.R. Munhoz published in the Technical Digest of the 12th European Conference on Optical Communication 1986, Vol. 1, pp.321-324. In the laser driver according to said paper a compensation signal is derived from the modulation signal and introduced into the feedback path at a point before the control amplifier. As a result of these measures, an amount of light proportional to the modulation signal is added when the emitted amount of light is biased, which added amount of light is proportional to the modulation signal without this addition affecting the bias as occurs in the state of the art.

A problem with the laser transmitter according to the prior art is that the transfer factor of the negative feedback path is sometimes not determined very accurately because the properties of the electro-optical and opto-electrical converters exhibit a strong variation per specimen, are temperature-dependent and are furthermore subject to slow variations with time due to ageing. For several applications the magnitude of the cancelling signal should be set separately for each combination of electro-optical and opto-electrical converters, which would entail additional manufacturing costs.

The object of the present invention is to provide a laser transmitter in which the above mentioned problems are eliminated.

Therefor the transmitter is characterised in that in that the transmitter comprises cancelling means for deriving a cancelling signal from the modulation signal and for inserting this cancelling signal in the feedback path at a location before the control amplifier for rendering the output signal of the control amplifier independent of the modulation signal, and in that the negative feedback path comprises a cascade connection of an electro-optical converter, an opto-electrical converter and an automatic gain control, in that an auxiliary signal is applied to a third input of the combining means; in that the transmitter comprises means for fixing the transfer factor of the cascade connection at a predetermined value on the basis of the output signal component part of the cascade connection which component originates from the auxiliary signal, by setting the gain factor of the automatic gain control at a correct value.

By setting the transfer factor of the negative feedback path at a fixed value which is independent of the properties of the electro-optical converter and the opto-electrical converter, the transfer of the negative feedback path is known and a cancelling signal may be used which is derived from the modulation signal in a fixed, predetermined manner.

It should be observed that the use of an auxiliary signal for fixing the gain factor of a cascade connection constituted by an electro-optical converter, an opto-electrical converter and an automatic gain control at a constant value, is known *per se* from above United States Patent. However, in the known optical transmitter, the automatic gain control is not included in the negative feedback path of the control loop. The use of the cascade connection in the known transmitter furthermore serves a second purpose, that is to say, obtaining a modulated light signal that has an amplitude that is independent of the properties of the electro-optical converter.

An embodiment of the invention is characterised in that the combining means comprise a summator.

Because adding circuits are simple to realise, arranging the combining means by way of an adding circuit results in a simplification of the transmitter according to the invention.

A further embodiment of the invention is characterised in that the negative feedback path has a low-pass frequency characteristic and in that the cancelling signal, equal to the product of -1, the negative feedback path transfer factor and the mean value of the modulation signal are coupled to the output of the negative feedback path.

If the negative feedback path has a low-pass characteristic so that only the mean value of the modulation signal is transferred, the cancelling signal only needs to cancel the mean value of the modulation signal, so that the cancelling signal may be derived from the mean value of the modulation signal. Calculating the mean value of the modulation signal may simply be effected by means of a low-pass filter.

By making the cancelling signal equal to the product of -1, the mean value of the modulation signal and the transfer factor of the negative feedback path, the cancelling signal has an equally large absolute value but an opposite sign to the output signal component of the negative feedback path which component originates from the modulation signal. By also feeding the cancelling signal to the input of the gain control, the input signal of the gain control and thus also the output signal of the gain control is independent of the modulation signal.

An alternative embodiment of the invention is characterised, in that the gain control has a low-pass frequency characteristic and in that the cancelling signal, which is equal to the product of -1, the transfer factor of the negative feedback path and the value of the modulation signal, are coupled to the output of the negative feedback path.

If the gain control has a low-pass characteristic, so that only the mean value is transferred of the output signal component of the negative feedback path which component originates from the modulation signal, the cancelling signal may be equal to the product of -1, the transfer factor of the negative feedback path for a constant signal (DC) and the value of the modulation signal. For that matter, all the high-frequency components in both the output signal of the negative feedback path and the cancelling signal will not be transferred by the gain control. However, the mean value of the output signal component of the negative feedback path which component originates from the modulation signal, will still be cancelled by the mean value of the cancelling signal.

A specific embodiment of the invention is characterized in that the output of the opto-electrical converter is coupled to the input of the automatic gain control.

By inserting the automatic gain control downstream of the opto-electrical converter, the bias of the emitted light signal is independent of the opto-electrical converter. Because the control loop maintains the output signal of the negative feedback path at a constant value, and because also the transfer factor of the negative feedback path is maintained at a constant value, the input signal of the negative feedback path and thus the input signal of the cascade connection is also constant. Because the bias of the amount of light emitted by the electro-optical converter is now solely determined by the constant part of the input signal of the cascade connection and the properties of the electro-optical converter, the amount of light emitted by the electro-optical converter will be independent of the properties of the opto-electrical converter.

Hereinbelow the invention will be further explained with reference to the drawing Figures, in which:

Fig. 1 shows a block diagram of a transmitter according to the invention;
Fig. 2 shows a gain control comprising a summator and an integrator to be used in a transmitter as shown in Fig. 1; Fig. 3 shows an automatic gain control 8, to be used in a transmitter as shown in Fig. 1;

Fig. 4 shows a band-pass filter 11 to be used in a transmitter as shown in Fig. 1;

Fig. 5 shows an auxiliary circuit generating the signals h' and y, to be used in a transmitter as shown in Fig. 1;

Fig. 6 shows a comparing circuit 12 to be used in a transmitter as shown in Fig. 1;

Fig. 7 shows an alternative embodiment of the comparing circuit 12; and

Fig. 8 shows a cancelling circuit generating the signals m', b and c, to be used in a transmitter as shown in Fig. 1.

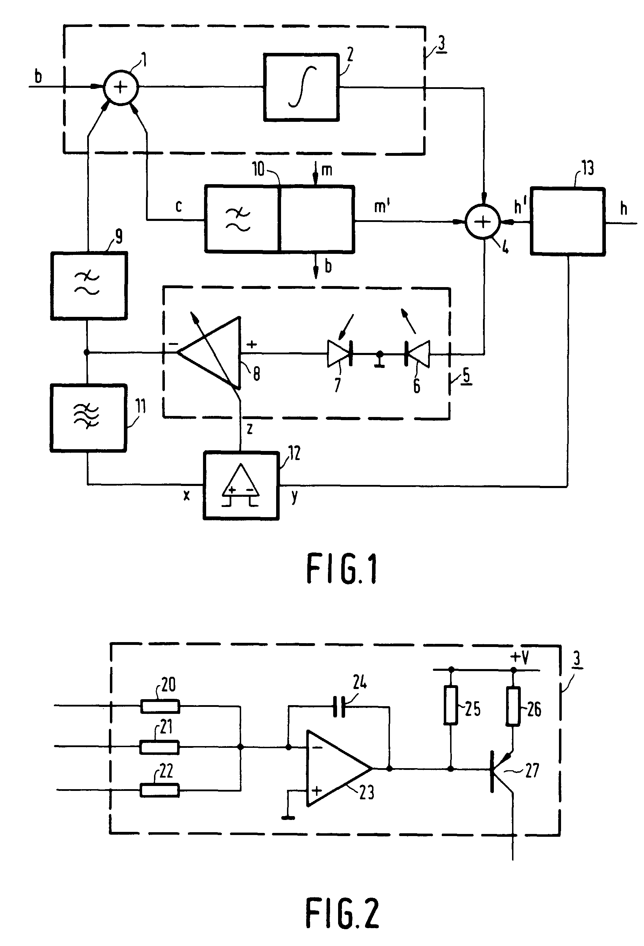

In Fig. 1 a reference signal b generated by a cancelling circuit 10 is fed to a first input of a gain control 3 constituted by a summator 1 and an integrator 2. The output of summator 1 is connected to the input of the integrator 2. The output of the integrator 2 is connected to a first input of the combining means in this case constituted by a summator 4. The output of the summator 4 is connected to the input of an electro-optical converter whose input is formed in this case by the anode of a laser diode 6. The cathode of the laser diode 6 is connected to a point of reference potential to be termed earth hereinafter. The laser diode 6 is optically coupled to an opto-electrical converter constituted by a photodiode 7. The cathode of the photodiode 7 is connected to earth. The anode of the photodiode 7 is connected to the input of an automatic gain control 8. The combination of laser diode 6, photodiode 7 and automatic gain control 8 constitutes the cascade connection 5. The output of the automatic gain control 8 is connected to the input of a low-pass filter 9 whose output is connected to a second input of the summator 1. The output of the automatic gain control 8 is likewise connected to the input of a band-pass filter 11. The negative feedback path of the control loop is formed by the cascade connection 5, the low-pass filter 9 and the summator 1.

An auxiliary signal h is fed to an input of an auxiliary circuit 13. A first output of the auxiliary circuit 13 carrying output signal h' is connected to a second input of the summator 4. A second output of the auxiliary circuit 13 carrying output signal y is connected to a first input of a comparing circuit 12. The output of the band-pass filter 11 carrying output signal x is connected to a second input of the comparing circuit 12. The output of the comparing circuit 12 carrying output signal z is connected to a control input of the inverting amplifier 8. A modulation signal m is fed to an input of a cancelling circuit 10. A first output of the cancelling circuit 10 carrying output signal m' is connected to a third input of the summator 4. A second output of the cancelling circuit 10 carrying output signal c, which signal forms the cancelling signal in accordance with the innovative concept, is connected to an input of the summator 1.

In Fig. 1 the control loop for fixing the bias of the amount of light emitted by the laser diode 6 is formed by the control amplifier 3, the summator 4, the cascade connection 5 and the low-pass filter 9. The control loop maintains the value of the output signal of the negative feedback path at -b, which signal is constituted in this case by the output signal of the low-pass filter 9, as a result of which the bias of the amount of light emitted by the laser diode 6 becomes equal to

$$U = \frac{b}{d \cdot A} \qquad (1)$$

In (1) d is the light intensity-to-current intensity conversion factor of the photodiode 7 and A is the gain factor of the amplifier 8.

The auxiliary circuit 13 derives two signals, h' and x, from an auxiliary signal which is sinusoidal. The auxiliary signal h' is applied to the inputs of the cascade connection 5 via the summator 4. The band-pass filter 11 passes only the output signal component of the cascade connection which component originates from the auxiliary signal h'. For equalizing the signals x and y, the amplitudes of the signals x and y are compared in the comparing circuit 12 and a signal z setting the gain factor of the amplifier 8 at the correct value is derived from the result of this comparison. By adapting the gain factor of the amplifier 8 so that the signals x and y are equal, the transfer factor of the cascade connection and in this case also the transfer factor of the negative feedback path is fixed at a constant value $C_1$ for low frequencies. For this transfer factor it now holds:

$$C_1 = L \cdot d \cdot A \qquad (2)$$

In (2) L is the current intensity-to-light intensity conversion factor of the laser diode 6. For the product d.A there may be written:

$$d \cdot A = \frac{C_1}{L} \qquad (3)$$

For the bias of the amount of light U emitted by the laser diode 6 one now finds by substituting (3) in (1):

$$U = \frac{b \cdot L}{C_1} \qquad (4)$$

This amount of light U is now exclusively determined by the constants b and $C_1$ and by the properties of the laser diode 6 and not by the properties of the photodiode 7.

In order to modulate the amount of light emitted by the laser 6, the signal m' derived from the modulation signal m is applied to the summator 4. According to the innovative concept, the cancelling signal c is derived from the modulation signal m by way of the cancelling means formed in this case by the cancelling circuit 10, and applied to the summator 1. In cancelling circuit 10 the cancelling signal c is obtained by sending the modulation signal through a low-pass filter. Since the transfer of the negative feedback path is fixed at a value $C_1$ for low frequencies, and since the transfer function of the cancelling circuit 10 is provided to be equal to $-C_1$ for the constant part of the modulation signal, the DC voltage value of the output signal c of the cancelling circuit 10 will have an equal magnitude but a different sign from the part of the DC voltage signal from the modulation signal at the output of the low-pass filter 9. As a result of the summation of these signals in summator 1, these signals cancel each other out, so that the modulation signal does not have any effect on the control loop. The low-pass filter 9 is inserted to provide a low-pass characteristic in the negative feedback path according to the innovative concept.

The signals fed to the summator 4 are fed by way of signal streams, so that the summation can be realised by simply interconnecting the inputs of the summator. The output signal of the photodiode 7 is also a current, whereas the output signal of the amplifier 8 is a voltage, so that the amplifier 8 is arranged as a current-to-voltage converter.

In Fig. 2 the three inputs of the gain control 3 are connected each to a first connecting point of mutually equal resistors 20, 21 and 22. A second connecting point of the resistors 20, 21 and 22 is connected to the inverting input of an operational amplifier 23. The inverting input of the operational amplifier 23 is also connected to a first connecting point of a capacitor 24. The non-inverting input of the operational amplifier 23 is connected to earth. The output of the operational amplifier 23 is connected to a second connecting point of the capacitor 24, to a first connecting point of a resistor 25 and to the base of a PNP transistor 27. A second connecting point of the resistor 25 is connected to a positive supply voltage +V. The emitter of the transistor 27 is connected to a first connecting point of a resistor 26, whilst a second connecting point of the resistor 26 is connected to the positive supply voltage +V. The output of the gain control 3 is formed by the collector of the transistor 27.

In the gain control shown in Fig. 2 the operational amplifier 23, as a result of a known property of a negative feedback operational amplifier, will control the voltage between its input terminals to zero so that the potential on the inverting input of the operational amplifier 23 equals the earth potential. Due to the lack of voltage difference between the inputs of the operational amplifier 23, all the current from the resistors 20, 21 and 22 will flow into the capacitor 24. The current supplied to the capacitor 24 now equals the quotient of the sum of the voltages on the three inputs of the gain control and the resistance of the mutually equal resistors 20, 21 and 22. The capacitor 24 integrates this sum, so that on the output of the operational amplifier 23 there is a voltage which is proportional to the integral of the sum of the three input voltages of the control amplifier 3. The transistor 27 and the resistor 26 together form a voltage-to-current converter converting the output voltage of the operational amplifier 23 into an output current.

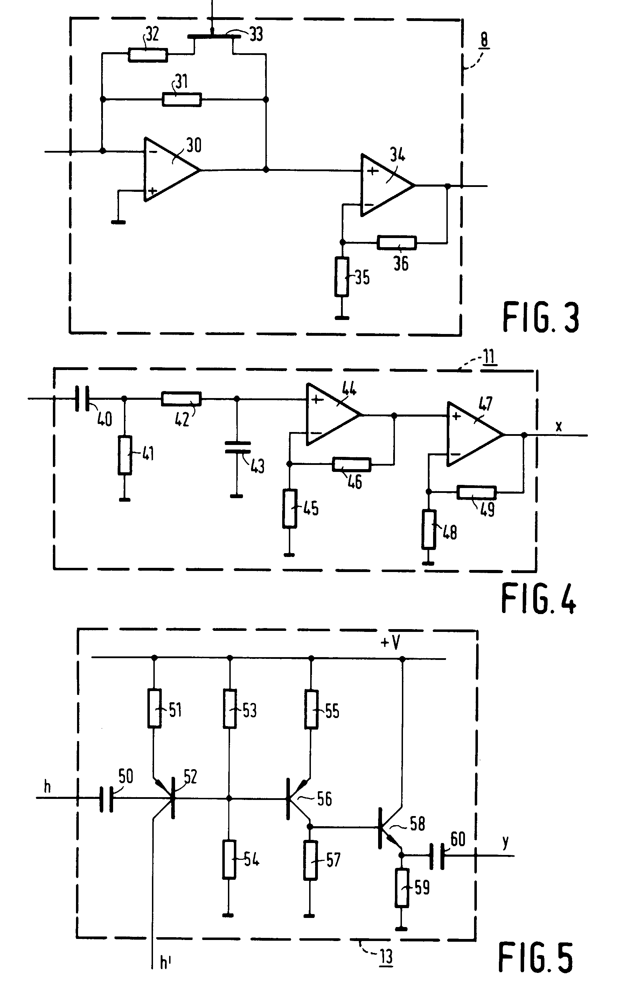

In Fig. 3 the input of the automatic gain control 8 which is arranged as a current-to-voltage converter is formed by a junction of the non-inverting input of an operational amplifier 30, a first connecting point of a resistor 31 and a first connecting point of a resistor 32. The inverting input of the operational amplifier 30 is connected to earth. A second connecting point of the resistor 32 is connected to the source of a field-effect transistor 33. The drain of the field-effect transistor 33 is connected to the output of the operational amplifier 30. The output of the operational amplifier 30 is also connected to a second connecting point of the resistor 31 and to the non-inverting input of an operational amplifier 34. The inverting input of the operational amplifier 34 is connected to a first connecting point of a resistor 35 and to a first connecting point of a resistor 36. A second connecting point of the resistor 36 is connected to the output of the operational amplifier 34 whilst a second connecting point of the resistor 35 is connected to earth.

In the automatic gain control shown in Fig. 3 the control is realised by means of the current-to-voltage converter constituted by operational amplifier 30, the resistors 31 and 32 and the field-effect transistor 33. As a result of a known property of negative feedback operational amplifiers, the operational amplifier 30 will control the voltage difference between its inputs to zero, so that the inverting input of the operational amplifier 30 will adopt the earth potential. Due to the lack of voltage difference between the two inputs of the operational amplifier 30, all the current fed to the input will flow through the negative feedback network constituted by the resistors 31 and 32 and the field-effect transistor 33. Because the impedance of the negative feedback network can be adjusted by means of the gate voltage of the field-effect transistor 33, the transfer factor of the current-to-voltage converter will also be adjustable. The resistors 31 and 32 are included to fix the maximum and the minimum value of the transfer factor of the current-to-voltage converter at a certain value. The current-to-voltage converter proper is followed by a prior-art non-inverting amplifier which is constituted by operational amplifier 34, resistor 35 and resistor 36.

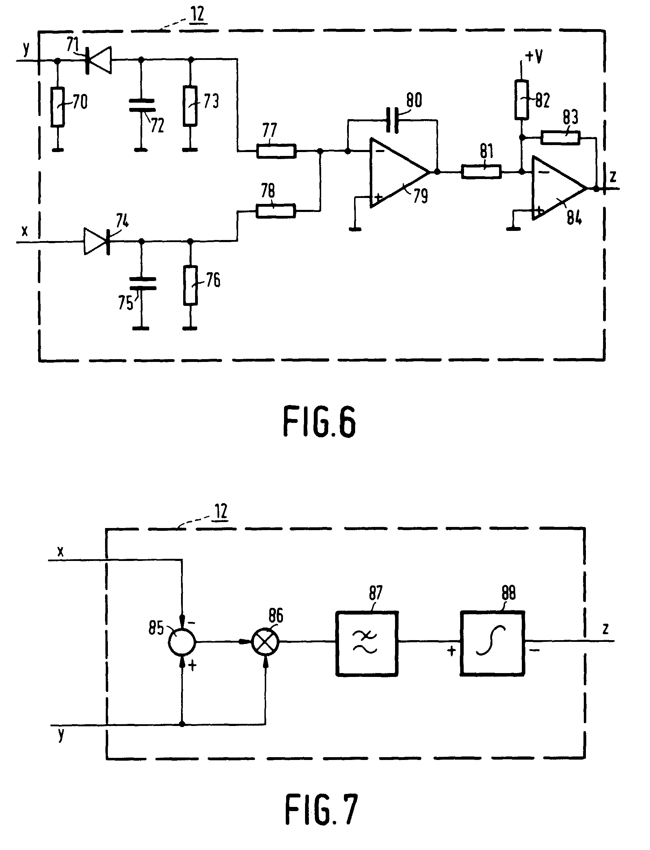

In the band-pass filter shown in Fig. 4 the input is formed by a first connecting point of a capacitor 40. A second connecting point of the capacitor 40 is connected to a first connecting point of a resistor 41 and to a first connecting point of a resistor 42. A second connecting point of the resistor 41 is connected to earth. A second connecting point of the resistor 42 is connected to a first connecting point of a capacitor 43 and to the non-inverting input of an operational amplifier 44. The inverting input of the operational amplifier 44 is connected to a first connecting point of a resistor 45 and to a first connecting point of a resistor 46. A second connecting point of the resistor 45 is connected to earth whilst a second connecting point of the resistor 46 is connected to the output of the operational amplifier 44. The output of the operational amplifier 44 is connected to the non-inverting input of an operational amplifier 47. The inverting input of the operational amplifier 47 is connected to a first connecting point of a resistor 48 and to a first connecting point of a resistor 49. A second connecting point of the resistor 48 is connected to earth whilst a second connecting point of the resistor 49 is connected to the output of the operational amplifier 47, which output likewise forms the output of the band-pass filter.

In Fig. 4 the capacitor 40 and the resistor 41 constitute a high-pass filter, whilst the resistor 42 and the capacitor 43 constitute a low-pass filter. By cascading the high-pass filter and the low-pass filter, a band-pass filter is obtained. The output signal of the band-pass filter is available at the junction of the resistor 42 and the capacitor 43. The signal available there is amplified to an output signal x by means of two cascaded prior-art non-inverting amplifiers constituted by the operational amplifier 44 and the resistors 45 and 46 as well as the operational amplifier 47 and the resistors 48 and 49 respectively.

In the auxiliary circuit 13 shown in Fig. 5, the auxiliary signal h is applied to a first connecting point of a capacitor 50. A second connecting point of the capacitor 50 is connected to the base of a PNP transistor 52, to the base of a PNP transistor 56, to a first connecting point of a resistor 53 and to a first connecting point of a resistor 54. The emitter of the transistor 52 is connected to a first connecting point of a resistor 51. A second connecting point of the resistor 51 is connected to the positive supply voltage +V. The collector of the transistor 52 forms a first output of the auxiliary circuit 13 and carries output current h'.

A second connecting point of the resistor 53 is connected to the positive supply voltage +V, whilst a second connecting point of the resistor 54 is connected to earth. The emitter of the transistor 56 is connected to a first connecting point of a resistor 55. A second connecting point of the resistor 55 is connected to the positive supply voltage +V. The collector of the transistor 56 is connected to a first connecting point of a resistor 57 and to the base of an NPN transistor 58. A second connecting point of the resistor 57 is connected to earth. The collector of the transistor 58 is connected to the positive supply voltage +V and the emitter of the transistor 58 is connected to a first connecting point of a capacitor 60 and to a first connecting point of a resistor 59. A second connection point of the resistor 59 is connected to earth. A second connecting point of the capacitor 60 forms the second output of the auxiliary circuit 13 and carries output signal y.

A first part of the auxiliary circuit comprises a voltage-to-current converter constituted by the transistor 52 and the resistor 51. The transistor 52 is biassed by means of the voltage divider constituted by the resistors 53 and 54. The auxiliary signal h is transferred to the base of the transistor 52 by means of the capacitor 50, so that the input voltage h is converted into an output current h'. The voltage h is furthermore coupled to the input of an inverting amplifier constituted by the transistor 56 and the resistors 55 and 57. The bias current of the transistor 56 is also fixed by the resistors 53 and 54. The collector of transistor 56 now carries an amplified version of the voltage h. This voltage is transferred to the output by means of a capacitor 60 *via* an emitter-follower constituted by the transistor 58 and the resistor 59. Capacitor 60 is present to block the DC voltage transfer from the emitter of the transistor 58 to the output.

In the comparing circuit as shown in Fig. 6, the input signal y is applied to a first connecting point of a resistor 70 and to the cathode of a diode 71. The anode of the diode 71 is connected to a first connecting point of the capacitor 72, to a first connecting point of a resistor 73 and to a first connecting point of a resistor 77. A second connecting point of the resistor 70, a second connecting point of the capacitor 72 and a second connecting point of the resistor 73 are connected to earth. A second connecting point of the resistor 77 is connected to the inverting input of an operational amplifier 79. The input signal x is fed to the anode of a diode 74. The cathode of the diode 74 is connected to a first connecting point of a capacitor 75, to a first connecting point of a resistor 76 and to a first connecting point of a resistor 78. A second connecting point of the capacitor 75 and a second connecting point of the resistor 76 are connected to earth. A second connecting point of the resistor 78 is connected to the inverting input of the operational amplifier 79. The inverting input of the operational amplifier is furthermore connected to a first connecting point of a capacitor 80. The non-inverting input of the operational amplifier 79 is connected to earth. A second connecting point of the capacitor 80 is connected to the output of the operational amplifier 79. The output of the operational amplifier 79 is furthermore connected to a first connecting point of a resistor 81. A second connecting point of the resistor 81 is connected to the inverting input of an operational amplifier 84. The inverting input of the operational amplifier 84 is furthermore connected to a first connecting point of a resistor 82 and to a first connecting point of a resistor 83. The non-inverting input of the operational amplifier 84 is connected to earth. A second connecting point of the resistor 82 is connected to the positive supply voltage +V. A second connecting point of the resistor 83 is connected to the output of the operational amplifier 84. The output of the operational amplifier 84 carries the output signal z of the comparing circuit.

The input signal y is rectified and smoothed by the combination of the diode 71, the capacitor 72 and the resistor 73. The voltage available at the first connecting point of the capacitor 72 has a negative sign. The resistor 70 is included for fixing the DC voltage level of the cathode of the diode 71 to earth potential. The input signal x is rectified and smoothed by the combination of the diode 74, the capacitor 75 and the resistor 76. The voltage available at the first connecting point of the capacitor 75 has a positive sign. The signals thus obtained are added together and integrated by means of a summating integrator constituted by the resistors 77 and 78, the operational amplifier 79 and the capacitor 80. Due to the different signs of the input signals of the integrator, the integrator output carries a signal proportional to the integrated difference of the amplitudes of the signals y and x. The output signal of the integrator is amplified to the output signal z by means of an inverting amplifier constituted by the resistors 81 and 83 and the operational amplifier 84. The resistor 82 is included to shift the range of the output signal z by a certain value when an output signal of the integrator is absent. This is desired for obtaining a proper biassing of the field-effect transistor 33 in the automatic gain control shown in Fig. 3.

In the alternative comparing circuit 12 shown in Fig. 7, the signal y is fed to a positive input of a subtracter 85 and to a first input of a multiplier 86. The signal x is applied to the negative input of the subtracter 85. The output of the subtracter 85 is connected to a second input of the multiplier 86. The output of the multiplier 86 is connected to the input of a low-pass filter 87. The output of the low-pass filter is connected to the input of an inverting integrator 88. The output of the integrator 88 forms the output of the comparing circuit 12.

In subtracter 85 the difference is calculated between the signal x and the signal y proportional to the signal x. At the output of the subtracter 85 a signal is available having an amplitude proportional to the amplitude difference of the signals x and y and having the same frequency as the signal x. By multiplying the difference signal x-y by the signal y in the multiplier, a signal is obtained comprising a DC voltage term which is proportional to the amplitude of the difference signal x-y. The low-pass filter 87 passes only the DC voltage component of the output signal of the multiplier 86. By integrating the output signal of the low-pass filter 87 by means of the integrator 88, an output signal z is obtained which is proportional to the integrated value of the amplitude difference of the signals y and x.

Because the product of two sinusoidal voltages can produce a DC voltage only in the case where the frequencies of the two signals are equal, any additional signal components in the signal y having different frequencies from the signal x do not at all affect the value of the output signal z. As a result, the band-pass filter 11 may be omitted if a comparator circuit as shown in Fig. 7 is used in a transmitter as shown in Fig. 1.

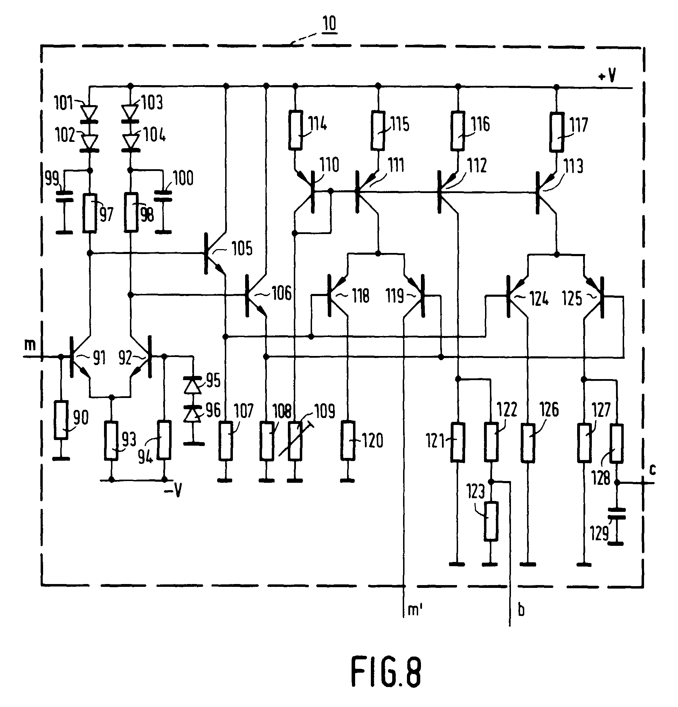

In the cancelling circuit shown in Fig. 8 the modulation signal m is applied to the base of an NPN transistor 91 and to a first connecting point of a resistor 90. A second connecting point of the resistor 90 is connected to earth. The emitter of the transistor 91 is connected to the emitter of an NPN transistor 92 and to a first connecting point of a resistor 93. A second connecting point of the resistor 93 is connected to the negative supply voltage -V. The base of the transistor 92 is connected to a first connecting point of a resistor 94 and to the cathode of a diode 95. A second connecting point of the resistor 94 is connected to the negative supply voltage -V. The anode of the diode 95 is connected to the cathode of a diode 96 whilst the anode of the diode 96 is connected to earth.

The collector of the transistor 91 is connected to the base of an NPN transistor 105 and to a first connecting point of a resistor 97. A second connecting point of the resistor 97 is connected to a first connecting point of a capacitor 99 and to the cathode of a diode 102. A second connecting point of the capacitor 99 is connected to earth. The anode of the diode 102 is connected to the cathode of a diode 101. The anode of the diode 101 is connected to the positive supply voltage +V. The collector of the transistor 92 is connected to the base of an NPN transistor 106 and to a first connecting point of a resistor 98. A second connecting point to the resistor 98 is connected to a first connecting point of a capacitor 100 and to the cathode of a diode 104. A second connecting point of the capacitor 100 is connected to earth. The anode of the diode 104 is connected to the cathode of a diode 103. The anode of the diode 103 is connected to the positive supply voltage +V.

The collector of the transistor 105 is connected to the positive supply voltage +V. The collector of the transistor 106 is also connected to the supply voltage +V. The emitter of the transistor 105 is connected to a first connecting point of a resistor 107, to the base of a PNP transistor 118 and to the base of a PNP transistor 124. A second connecting point of the resistor 107 is connected to earth. The emitter of the transistor 106 is connected to a first connecting point of a resistor 108, to the base of a PNP transistor 119 and to the base of a PNP transistor 125. A second connecting point of the resistor 108 is connected to earth.

A first connecting point of a resistor 109 is connected to earth whilst a second connecting point of the resistor 109 is connected to the collector and the base of a PNP transistor 110. The base of the transistor 110 is furthermore connected to the base of PNP transistors 111, 112 and 113. The emitter of the transistor 110 (111, 112, 113) is connected to a first connecting point of a resistor 114 (115, 116, 117). A second connecting point of the resistor 114 (115, 116, 117) is connected to the positive supply voltage +V. The collector of the transistor 111 is connected to the emitter of the transistor 118 and to the emitter of the transistor 119. The collector of the transistor 118 is connected to a first connecting point of a resistor 120. A second connecting point of the resistor 120 is connected to earth. The collector of the transistor 119 forms an output of the cancelling circuit 10 and carries output current m'. The collector of the transistor 112 is connected to a first connecting point of a resistor 121 and to a first connecting point of a resistor 122. A second connecting point of the resistor 121 is connected to earth. A second connecting point of a resistor 122 is connected to a first connecting point of a resistor 123. A second connecting point of the resistor 123 is connected to earth. At the junction between the resistors 122 and 123 the output voltage b is available. A second connecting point of the resistor 123 is connected to earth.

The collector of the transistor 113 is connected to the emitter of the transistor 124 and to the emitter of the transistor 125. The collector of the transistor 125 is connected to a first connecting point of a resistor 127 and to a first connecting point of a resistor 128. A second connecting point of the resistor 127 is connected to earth. A second connecting point of the resistor 128 is connected to a first connecting point of a capacitor 129. A second connecting point of the capacitor 129 is connected to earth. At the junction between the resistor 128 and the capacitor 129 the output signal c is available. The collector of the transistor 124 is connected to a first connecting point of a resistor 126 whilst a second connecting point of the resistor 126 is connected to earth.

The digital signal m applied to the cancelling circuit 10 which signal has ECL signal levels (logic "0" = -1.7 volts relative to earth, logic "1" = -0.9 volt relative to earth) is converted by means of the differential amplifier constituted by the transistors 91 and 92 and the resistors 97 and 98 into a balanced digital signal available at the collectors of the transistors 91 and 92. The bias current of the transistors 91 and 92 is fixed by the resistor 93. The combination of the diodes 95 and 96 and the resistor 94 fixes the potential of the base of the transistor 92 at a value of about -1.3 volts, which value is the average of the two levels of the input signal. With a -0.9 volt input signal the transistor 91 is fully conductive, whereas transistor 92 is cut off. With a -1.7 volts input signal the transistor 91 is fully cut off, whereas transistor 92 is fully conductive. The resistors 97 and 98 fix the value of the signal levels of the balanced output signal. The diodes 101, 102, 103 and 104 fix the DC voltages on the collectors of the transistors 91 and 92 at a desired value. The capacitors 99 and 100 avoid that disturbing signals from the differential amplifier enter the positive supply voltage line.

The symmetrical digital signal at the output of the differential amplifier is buffered by means of two emitter followers constituted by the transistors 105, 106 and the resistors 107, 108 respectively. The buffered symmetrical signal drives two current switches which are both constituted by a differential amplifier. The reference current flowing through the current switches is generated by means of a resistor 109, which current is applied to a current mirror circuit which has three output currents, which current mirror circuit comprises the transistors 110, 111, 112 and 113 and the resistors 114, 115, 116 and 117. The collector current of the transistor 111 is switched by the modulation signal with the aid of the current switch constituted by the transistors 118 and 119. The collector current of the transistor 118 is applied to the resistor 120 and the collector current of the transistor 119 forms the output signal m' of the cancelling circuit 10. The resistor 120 is included for mutually equalizing the loads of the two transistors 118 and 119 so as to obtain a symmetrical switching behaviour.

The collector current of the transistor 112 is controlled by a resistor array constituted by the resistors 121, 122 and 123. The signal b is available at the junction between the resistors 122 and 123. The collector current of the transistor 113 is switched by the modulation signal with the aid of the current switch constituted by the transistors 124 and 125. The collector current of the transistor 124 is controlled by the resistor 126 and the collector current of the transistor 125 is controlled by the resistor 127. A signal derived from the modulation signal is available at the collector of the transistor 125. By filtering this signal with the aid of a low-pas filter constituted by the resistor 128 and the capacitor 129, the cancelling signal c according to the innovative concept is obtained. The resistor 126 is included for substantially mutually equalizing the loads of the transistors 124 and 125, so as to obtain a symmetrical switching behaviour.

## Claims

1.  Optical transmitter comprising a combination of an electro-optical converter (6) and an opto-electrical converter (7) optically coupled thereto, which combination is included in the negative feedback path (5,9) of a control loop, the input of the electro-optical converter (6) being coupled to the input of the negative feedback path (5,9) and the output of the opto-electrical converter (7) being coupled to the output of the negative feedback path (5,9); this control loop also including a control amplifier (3), whilst the output of the negative feedback path (5,9) is coupled to an input of the control amplifier (3), the output of the control amplifier (3) is coupled to a first input of combining means (4) whose output is coupled to the input of the negative feedback path (5,9) and whilst a modulation signal (m') is applied to a second input of the combining means (4), characterised in that the transmitter comprises cancelling means (10) for deriving a cancelling signal from the modulation signal and for inserting this cancelling signal in the negative feedback path (5,9) at a location before the control amplifier (3) for rendering the output signal of the control amplifier (3) independent of the modulation signal, and in that the negative feedback path (5,9) comprises a cascade connection (5) of an electro-optical converter (6), an opto-electrical converter (7) and an automatic gain control (8), in that an auxiliary signal (h') is applied to a third input of the combining means (4); in that the transmitter comprises means (12) for fixing the transfer factor of the cascade connection (5) at a predetermined value on the basis of the output signal component part of the cascade connection (5) which component originates from the auxiliary signal, by setting the gain factor of the automatic gain control (8) at a correct value.

2. Transmitter as claimed in Claim 1, characterised in that the combining means (4) comprise a summator.

3. Transmitter as claimed in Claim 1 or 2, characterised in that the negative feedback path (5,9) has a low-pass frequency characteristic and in that the cancelling signal, equal to the product of -1, the negative feedback path transfer factor and the mean value of the modulation signal are coupled to the output of the negative feedback path.

4. Transmitter as claimed in Claim 1, 2 or 3, characterised, in that the gain control (8) has a low-pass frequency characteristic and in that the cancelling signal, which is equal to the product of -1, the transfer factor of the negative feedback path (5,9) and the value of the modulation signal, are coupled to the output of the negative feedback path.

5. Transmitter as claimed in one of the preceding Claims, characterised in that the output of the optoelectrical converter (7) is coupled to the input of the automatic gain control (8).

## Patentansprüche

1. Optischer Sender mit einer Kombination eines elektrooptischen Wandlers (6) und eines optisch damit gekoppelten optoelektrischen Wandlers (7), wobei diese Kombination in die Gegenkoppelstrecke (5, 9) einer Regelschleife aufgenommen ist, wobei der Eingang des elektrooptischen Wandlers (6) mit dem Eingang der Gegenkoppelstrecke (5, 9) gekoppelt ist und wobei der Ausgang des optoelektrischen Wandlers (7) mit dem Ausgang der Gegenkoppelstrecke (5, 9) gekoppelt ist; wobei diese Regelschleife auch einen Regelverstärker (3) aufweist, wobei der Ausgang der Gegenkoppelstrecke (5, 9) mit einem Eingang des Regelverstärkers (3) gekoppelt ist, wobei der Ausgang des Regelverstärkers (3) mit einem ersten Eingang von Kombiniermitteln (4) gekoppelt ist, deren Ausgang mit dem Eingang der Gegenkoppelstrecke (5, 9) gekoppelt ist und wobei einem zweiten Eingang der Kombiniermittel (4) ein Modulationssignal (m') zugeführt wird, dadurch gekennzeichnet, daß der Sender mit Ausgleichsmitteln (10) versehen ist um aus dem Modulationssignal ein Ausgleichsignal abzuleiten und dies in die Gegenkoppelstrecke (5, 9) einzuführen an einer Stelle vor dem Regelverstärker, damit das Ausgangssignal des Regelverstärkers (3) unabhängig von dem Modulationssignal ist, und daß die Gegenkoppelstrecke (5, 9) eine Kaskadenschaltung (5) eines elektrooptischen Wandlers (6), eines optoelektrischen Wandlers (7) und einer automatischen Verstärkungsregelung (8) aufweist, daß einem dritten Eingang der Kombiniermittel (4) ein Hilfssignal (h') zugeführt wird, daß der Sender Mittel (12) aufweist zum Festlegen des Übertragungsfaktors der Kaskadenschaltung (5) auf einen vorbestimmten Wert auf Basis des Ausgangssignalanteils der Kaskadenschaltung (5), wobei dieser Anteil von dem Hilfssignal herrührt, indem der Verstärkungsfaktor der automatischen Verstärkungsregelung (8) auf einen einwandfreien Wert festgelegt wird.

2. Sender nach Anspruch 1, dadurch gekennzeichnet, daß die Kombiniermittel (4) einen Summierer aufweisen.

3. Sender nach Anspruch 1 oder 2, dadurch gekennzeichnet, daß die Gegenkoppelstrecke (5, 9) eine Tiefpaßcharakteristik hat und daß das Ausgleichsignal, das dem Produkt aus -1, dem Übertragungsfaktor der Gegenkoppelstrecke und dem Wert des Modulationssignals entspricht, mit dem Ausgang der Gegenkoppelstrecke gekoppelt ist.

4. Sender nach Anspruch 1, 2 oder 3, dadurch gekennzeichnet, daß die automatische Verstärkerregelung (8) eine Tiefpaßcharakteristik hat und daß das Ausgleichsignal, das dem Produkt aus -1, dem Übertragungsfaktor der Gegenkoppelstrecke (5, 9) und dem Wert des Modulationssignals entspricht, mit dem Ausgang der Gegenkoppelstrecke gekoppelt ist.

5. Sender nach einem der vorstehenden Ansprüche, dadurch gekennzeichnet, daß der optoelektrische Wandler (7) mit dem Eingang der automatischen Verstärkerregelung (8) gekoppelt ist.

## Revendications

1. Emetteur optique comprenant une combinaison d'un convertisseur électro-optique (6) et d'un convertisseur opto-électrique (7) qui y est couplée optiquement, laquelle combinaison est incluse dans la chaîne de contre-réaction (5, 9) d'un circuit régulateur, l'entrée du convertisseur électro-optique (6) étant couplée à l'entrée de la chaîne de contre-réaction (5, 9) et la sortie du convertisseur opto-électrique (7) étant couplée à la sortie de la chaîne de contre-réaction (5, 9); le circuit régulateur comporte également un amplificateur de contrôle (3), tandis que la sortie de la chaîne de contre-réaction (5, 9) est couplée à une entrée de l'amplificateur de contrôle (3), que la sortie de l'amplificateur de contrôle (3) est couplée à une première entrée d'un moyen de combinaison (4), dont la sortie est couplée à l'entrée de la chaîne de contre-réaction (5, 9), et qu'un signal de modulation (m') est appliqué à une seconde entrée du moyen de combinaison (4), caractérisé en ce que l'émetteur comprend un moyen d'annulation (10) permettant de dériver un signal d'annulation à partir du signal de modulation et d'insérer ce signal d'annulation dans la chaîne de contre-réaction (5, 9) en un endroit situé en amont de l'amplificateur de contrôle (3) afin de rendre le signal de sortie de l'amplificateur de contrôle (3) indépendant du signal de modulation, et en ce que la chaîne de contre-réaction (5, 9) comprend un montage en cascade (5) d'un convertisseur électro-optique (6), d'un convertisseur opto-électrique (7) et d'une commande de gain automatique (8), en ce qu'un signal auxiliaire (h') est appliqué à une troisième entrée du moyen de combinaison (4), en ce que l'émetteur comprend un moyen (12) pour fixer le facteur de transfert du montage en cascade (5) à une valeur prédéterminée sur la base de la composante de signal de sortie du montage en cascade (5), cette composante provenant du signal auxiliaire, en attribuant une valeur correcte au facteur de gain de la commande de gain automatique (8).

2. Emetteur suivant la revendication 1, caractérisé en ce que le moyen de combinaison (4) comprend un sommateur.

3. Emetteur suivant la revendication 1 ou 2, caractérisé en ce que la chaîne de contre-réaction (5,9) présente une caractéristique fréquentielle en passe-bas et en ce que le signal d'annulation, égal au produit de -1, du facteur de transfert de la chaîne de contre-réaction et de la valeur moyenne du signal de modulation, est couplé à la sortie de la chaîne de contre-réaction.

4. Emetteur suivant la revendication 1, 2 ou 3, caractérisé en ce que la commande de gain (8) présente une caractéristique fréquentielle en passe-bas et en ce que le signal d'annulation, égal au produit de -1, du facteur de transfert de la chaîne de contre-réaction (5, 9) et de la valeur du signal de modulation, est couplé à la sortie de la chaîne de contre-réaction.

5. Emetteur suivant l'une quelconque des revendications précédentes, caractérisé en ce que la sortie du convertisseur opto-électrique (7) est couplée à l'entrée de la commande de gain automatique (8).

FIG.1

FIG.2

FIG.3

FIG.4

FIG.5

# FIG.6

# FIG.7

FIG.8

14